# EUROPEAN PATENT SPECIFICATION

(11) **EP 1 950 909 B1**
(45) Date of publication and mention of the grant of the patent: **13.03.2013**
(21) Application number: 07425039.0
(22) Date of filing: 25.01.2007
(51) Int. Cl.: H04L 12/24

(54) **Management system of a telecommunication network with a web-like graphic interface**
Verwaltungssystem eines Telekommunikationsnetzes mit einer netzartigen graphischen Schnittstelle
Système de gestion d'un réseau de télécommunication doté d'une interface graphique de type web

(43) Date of publication of application: 30.07.2008
(73) Proprietor: Alcatel Lucent, 75007 Paris (FR)
(72) Inventor: Donadio, Pasquale, 80129 Napoli (IT); Paparella, Andrea, 21052 Busto Arsizio (Varese) (IT); Riglietti, Roberto, 20059 Vimercate (Milano) (IT)
(74) Representative: Wetzel, Emmanuelle

(56) References cited:
- WO-A-02/071691
- WO-A-03/026208
- US-A1- 2003 018 822
- US-B1- 6 526 442
- HUNG J L S ET AL: "THE APPLICATION OF WEB-BASED TECHNOLOGIES ON INTEGRATED NETWORK MANAGEMENT" IEEE GLOBECOM 1998. GLOBECOM '98. THE BRIDGE TO GLOBAL INTEGRATION. SYDNEY, NOV. 8 - 12, 1998, IEEE GLOBAL TELECOMMUNICATIONS CONFERENCE, NEW YORK, NY : IEEE, US, vol. VOL. 2, 1998, pages 1094-1098, XP000825915 ISBN: 0-7803-4985-7
- HALSE G A ET AL: "XML to facilitate management of multi-vendor networks" SOUTH AFRICAN TELECOMMUNICATIONS NETWORK AND APPLICATION CONFERENCE, 2 September 2001 (2001-09-02), pages 1-6, XP002247410
- CHAO-TUNG YANG ET AL: "Apply cluster and grid computing on parallel 3D rendering" MULTIMEDIA AND EXPO, 2004. ICME '04. 2004 IEEE INTERNATIONAL CONFERENCE ON TAIPEI, TAIWAN JUNE 27-30, 2004, PISCATAWAY, NJ, USA,IEEE, vol. 2, 27 June 2004 (2004-06-27), pages 859-862, XP010770955 ISBN: 0-7803-8603-5
- ALI SAJJAD ET AL: "A Component-based Architecture for an Autonomic Middleware Enabling Mobile Access to Grid Infrastructure" EMBEDDED AND UBIQUITOUS COMPUTING LECTURE NOTES IN COMPUTER SCIENCE;;LNCS, SPRINGER-VERLAG, BE, vol. 3823, 2005, pages 1225-1234, XP019025400 ISBN: 3-540-30803-2
- SEUNG-HYUN KIM; SEUNGHUN JIN: "Grid ID management based on distributed agents using SPML" 2006 IEEE TENTH INTERNATIONAL SYMPOSIUM ON CONSUMER ELECTRONICS, [Online] 11 September 2006 (2006-09-11), pages 1-6, XP002447324 ISBN: 1-4244-0216-6 Retrieved from the Internet: URL:http://ieeexplore.ieee.org/iel5/11112/ 35627/01689521.pdf?tp=&isnumber=&arnumber= 1689521> [retrieved on 2007-08-20]
- HOVESTADT M; KAO O; KELLER A; STREIT A: "Scheduling in HPC resource management systems: queuing vs. planning" JOB SCHEDULING STRATEGIES FOR PARALLEL PROCESSING. 9TH INTERNATIONAL WORKSHOP, JSSPP 2003. REVISED PAPERS, [Online] 2003, pages 1-19, XP002447325 Retrieved from the Internet: URL:http://www.cs.huji.ac.il/~feit/parsche d/jsspp03/p-03-1.pdf> [retrieved on 2007-08-20]
- LIN H-C ET AL: "DISTRIBUTED NETWORK MANAGEMENT BY HTTP-BASED REMOTE INVOCATION" 1999 IEEE GLOBAL TELECOMMUNICATIONS CONFERENCE. GLOBECOM'99. SEAMLESS INTERCONNECTION FOR UNIVERSAL SERVICES. RIO DE JANEIRO, BRAZIL, DEC. 5-9, 1999, IEEE GLOBAL TELECOMMUNICATIONS CONFERENCE, NEW YORK, NY : IEEE, US, vol. VOL. 3, 5 December 1999 (1999-12-05), pages 1889-1893, XP001003927 ISBN: 0-7803-5797-3
- FUJITA T: "WEBCOMPUTINGOPERATIONMANAGER FOR INTEGRATED NETWORK AND SYSTEM MANAGEMENT" NEC RESEARCH AND DEVELOPMENT, NIPPON ELECTRIC LTD. TOKYO, JP, vol. 41, no. 4, October 2000 (2000-10), pages 318-321, XP000967722 ISSN: 0547-051X

## Description

### Technical Field

The present invention relates to the field of telecommunication systems. In particular, the present invention relates to a management system of a telecommunication network with a web-like graphic interface.

### Background Art

As it is known, managing a telecommunication network provides to perform a number of operations (which are termed "management operations" in the following description), such as for instance:
- monitoring network performance;
- configuring network elements and their resources (boards, ports, cross-connections, etc.);
- managing errors occurring in the network; etc.

Typically, management operations are performed by an apparatus which is termed "network management system" (or, briefly, NMS). A network management apparatus is typically connected to each network element of the network to be managed.

More particularly, since current network elements are multi-service network elements, i.e. they may comprise several boards based on different technologies (SDH, Ethernet, ATM, etc.), a network management apparatus is typically connected to each network element so that it can communicate with each board of the network element. Communication with each board is carried out according to a given management protocol (SNMP, CORBA, TL1, etc.), which is dependent on the technology upon which the board is based.

Further, the network management system is capable of executing a plurality of management applications, each management application corresponding to a given management operation. More particularly, the network management apparatus is capable of executing a different set of management applications for each different technology included in the telecommunication network. Execution of a management application at the network management apparatus typically leads to a message exchange between the NMS and the managed network element, based upon the suitable management protocol.

Further, the network management system is typically configured for generating a plurality of management graphic interfaces. Each management graphic interface allows an operator responsible for the network management to launch one or more management applications in order to manage a network element, and to display the information relative to one or more resources of such a network element. Each technology included in the telecommunication network corresponds to a separate set of management graphic interfaces. Management graphic interfaces corresponding to different technologies are generally different both in their appearance and in their operation, since they are generally developed by different persons in different times.

Management graphic interfaces typically appear as screens wherein information is represented in form of a table. For instance, a management graphic interface allowing configuration of an Ethernet port may comprise a two-column table, wherein the first column comprises a set of port parameters (port identifier, port status, port rate, etc.), and the second column comprises, for each parameter, a corresponding value which can be modified by the operator to change the port configuration.

In the field of telecommunication networks, it is desirable to provide management systems operating in a web-like way. This is mainly due to the fact that these types of management systems advantageously allow to use management graphic interfaces similar to graphic interfaces of current computer programs for browsing the web (which are commonly termed "browsers"), such as Mozilla, Internet Explorer, etc. In the following description, such interfaces are referred to as "web-like graphic interfaces".

Since nowadays web-like graphic interfaces are widespread and are particularly simple and intuitive to use, their use for performing management of a telecommunication network would advantageously allow to reduce the training period of management operators, thus reducing network management and maintenance costs.

The known solution for providing a management system with web-like management graphic interfaces provides for modifying applications generating current management graphic interfaces so that each management graphic interface acquires a web-like appearance. In case of using the SNMP management protocol, it is provided to employ an XMUSNMP adapter, which is capable of translating data formatted according to the SNMP management protocol and received from the network in an XML file displayable by means of a web-like graphic interface.

US 6,526,442 discloses a programmable operational system for managing devices participating in a network including a collection of notices, operation logic that filters the collection of notices based on at least one criteria and that generates at least one operation indicative of a state change of the network, and an automation engine that uses the at least one operation to perform at least one process in response one or more operations.

WO 02/071691 discloses a system and method for communicating with network devices without regard to the device type and/or manufacturer is described.

US 2003/0018822 A1 discloses an apparatus and method that allows a party to submit multiple requests for management activities to a telecommunications device in a single submission.

Chao-Tung Yan 9) et al. "Apply a cluster and grid computing on parallel 3D rendering", 2004 IEEE International Conference on Multimedia and Expo (ICME), ISBN 0-7803-8603-5, discloses a PC cluster consisting of one master node and nine diskless slave nodes for parallel rendering purpose. Ali Sajjad et al. "A component-based architecture for an autonomic middleware enabling mobile access to grid infrastructure", Embedded and Ubiquitous Computing Lecture Notes in Computer Sciences, Springer-Verlag, BE, vol. 3823, 2005, pages 1225-1234, ISBN: 3-540-30803-2 discloses a component-based autonomic middleware that can handle the complexity of extending the potential of the Grid to a wider mobile audience.

Seung-Hyun Kim et al. "Grid ID management based on distributed agents using SPML", 2006 IEEE Tenth International Symposium on Consumer Electronics, ISBN: 1-4244-0216-6 discloses an agents-based distributed management architecture for the Grid environment.

Hovestadt M. et al. "Scheduling in HPC resource management system: queuing vs. planning", 9th Workshop on Job Scheduling Strategies for Parallel Processing 2003, retrieved from the Internet at URL:http://www.cs.huji.ac.il/-feit/parsche d/jsspp03/p-03-1.pdf on 2007-08-20, discloses an HPC system which assignees start times to each resource request for increasing usability, acceptance and performance of the HPC machines.

### Summary of the invention

The Applicant has noticed that the above known solution has some drawbacks.

First of all, modifying each traditional management graphic interface in a corresponding web-like management graphic interface requires an enormous development effort, since a NMS is typically adapted to generate a high number of management graphic interfaces. Furthermore, for some kinds of management graphic interfaces such a modification is not possible, since some functionalities of traditional management graphic interfaces can not be implemented by a typical web-like graphic interface.

Besides, using an adapted for translating data formatted according to a management protocol in data which may be displayed by a web-like graphic interface and vice versa slows down the management operations, since an intermediate passage is required.

In addition, the known solution requires to map the content of the local database of each network element (which local database comprises a representation of all the resources of all the boards of the network elements) in objects displayable by the web-like graphic interface. When the local database content changes, mapping must be updated. Such an updating becomes particularly burdensome in case of information on status of network elements' resources, which typically change frequently.

Accordingly, the Applicant has tackled the problem of providing a management system for a telecommunication network which has a web-like management graphic interface, and which overcomes the aforesaid drawbacks.

In particular, the Applicant has tackled the problem of providing a management system for a telecommunication network which has a web-like management graphic interface, which requires a smaller development effort relative to the known solution, wherein the management operations are faster than in the known solution, and wherein mapping of the content of local databases may be updated more easily than in the known solution.

According to a first aspect, the present invention provides a management system for a telecommunication network, the telecommunication network comprising a first set of resources based on a first technology and a second set of resources based on a second technology. The management system comprises: a browsing module configured to cooperate with a graphic interface; a data structure for mapping the first set of resources and the second set of resources, the graphic interface being configured for representing the data structure, and the browsing module being capable of accessing the first set of resources and the second set of resources through the data structure; a service application, the browsing module being capable of accessing the service application for performing a management operation upon a resource comprised either in the first set of resources or in the second set of resources; and a calculation grid, the calculation grid being adapted to support sharing of the service application among a plurality of network elements of the telecommunication network. Preferably, the system further comprises a terminal configured for communicating with a first network element of the plurality of network elements, the terminal being capable of executing the browsing module.

Advantageously, the service application is configured for being executed by the first network element or by a second network element of the plurality of network elements.

Optionally, the management system further comprises a shared memory mechanism for allowing the plurality of network elements to share the data structure.

Preferably, the service application is capable of generating information relating to an information graphic representation mode through the graphic interface. In this case, preferably, the system further comprises an application for displaying decorated information which is capable of processing said information relating to an information graphic representation mode.

According to preferred embodiments, the service application is written in a markup language. In particular, preferably, the service application is a web service.

According to a second aspect, the present invention provides a method of managing a telecommunication network, the telecommunication network comprising a first set of resources based on a first technology and a second set of resources based on a second technology. The method comprises the following steps: a) executing a browsing module configured for cooperating with a graphic interface; b)mapping in a data structure the first set of resources and the second set of resources, the data structure being configured for being displayed by the graphic interface; c) accessing the first set of resources and the second set of resources mapped in the data structure by the browsing module; and d) executing by means of the browsing module a service application for performing a management operation on a resource comprised either in the first set of resources or in the second set of resources, wherein the method further comprises a step of sharing the service application among a plurality of network elements of the telecommunication network through a calculation grid. In this case, preferably, step a) is performed by a terminal configured for communicating with a first network element of the plurality of network elements. Further, preferably, step d) is performed by the first network element or by a second network element of the plurality of network elements.

Preferably, the method further comprises a step of sharing the data structure by means of a shared memory mechanism.

According to preferred embodiments, the method further comprises, after step d), a step of generating information relating to an information graphic representation mode through the graphic interface. In this case, preferably, the method further comprises a step of processing said information relating to an information graphic representation mode.

Preferably, the service application is written in a markup language. More preferably, the service application is a web service.

According to a third aspect, the present invention provides a computer program for a telecommunication network, the telecommunication network comprising a first set of resources based on a first technology and a second set of resources based on a second technology, wherein the computer program is configured, when run on a computer, to perform all the steps of the method as set forth above.

According to a fourth aspect, the present invention provides a computer readable medium having a computer program recorded thereon, wherein the computer program is configured, when run on a computer, to perform all the steps of the method as set forth above.

### Brief description of the drawings

The present invention will be better understood by reading the following detailed description, given by way of example and not of limitation, to be read by referring to the accompanying drawings, wherein:
- Figure 1 schematically shows a telecommunication network with a management system according to a first embodiment of the present invention;
- Figure 2 shows a representation of the resources of the network of Figure 1 in form of a data cube, according to an embodiment of the present invention;
- Figure 3 schematically shows a telecommunication network with a management system according to a second embodiment of the present invention,
- Figure 4 schematically shows a telecommunication network with a management system according to a third embodiment of the present invention;
- Figure 5 schematically shows a telecommunication network with a management system according to a fourth embodiment of the present invention; and
- Figures 6a and 6b schematically show different steps of execution of a management operation upon the network of Figure 5.

### Detailed description of preferred embodiments of the invention

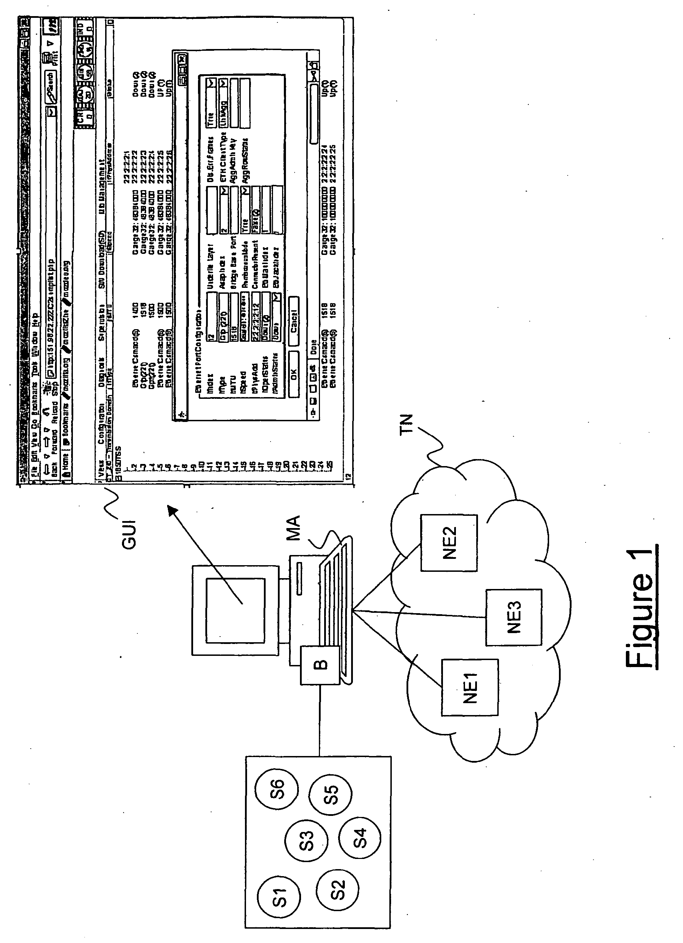

Figure 1 schematically shows a telecommunication network TN with a management system according to a first embodiment of the present invention.

For simplicity, it is assumed that the telecommunication network TN comprises only three network elements NE1, NE2 and NE3. Obviously, this is merely exemplary, since the telecommunication network TN may comprise any number of network elements. Each network element NE1, NE2 and NE3 may comprise one or more boards based on different technologies (Ethernet, ATM, SDH, Sonet, etc.). For simplicity, boards are not shown in Figure 1. The connections between the network elements NE1, NE2 and NE3 which connections support the transmission of user traffic are not shown in Figure 1, since they are not useful to the present description.

The telecommunication network TN is connected to a management apparatus MA, which in Figure 1 is shown as a computer external to the telecommunication network TN. The management apparatus MA communicates with each network element NE1, NE2 and NE3. Communication between the management apparatus MA and each network element NE1, NE2 and NE3 is performed according to one or more management protocol, which depend on the technology upon which boards comprised in the network elements NE1, NE2 and NE3 are based. For instance, if a network element comprises an Ethernet board, communication between the management apparatus MA and that network element may be based upon the already mentioned SNMP protocol. Besides, if the network element comprises an SDH board, communication between the management apparatus MA and that network element may be based upon the CMIP/CMISE protocol.

According to this first embodiment, the management apparatus MA is configured for executing a browsing module B, such as a browsing application ("browser") B. The browsing module B is suitable for generating a web-like graphic interface GUI and to access a set of service application S1, ..., S6. Each service application S1, ..., S6 is adapted to perform one or more steps of a management operation. Therefore, according to the management operation to be performed, the browsing module B invokes execution of at least one of the service applications S1, ..., S6.

Preferably, the service application S1, ..., S6 are written in a markup language, such as e.g the SGML ("Generalized Markup Language") or XML ("Extensible Markup Language"), so that they are accessible by the browsing module B.

According to a particularly preferred embodiment of the present invention, the service applications S1, ..., S6 are implemented as Web Services. As it is known, a Web Service is a service application designed for supporting interaction between two computers connected to a network. A Web Service has an interface written in a format which can be processed by a computer (in particular, the format WSDL, or "Web Service Description Language"). Different Web Services interact by means of an http-based protocol which is termed SOAP ("Simple Object Access Protocol").

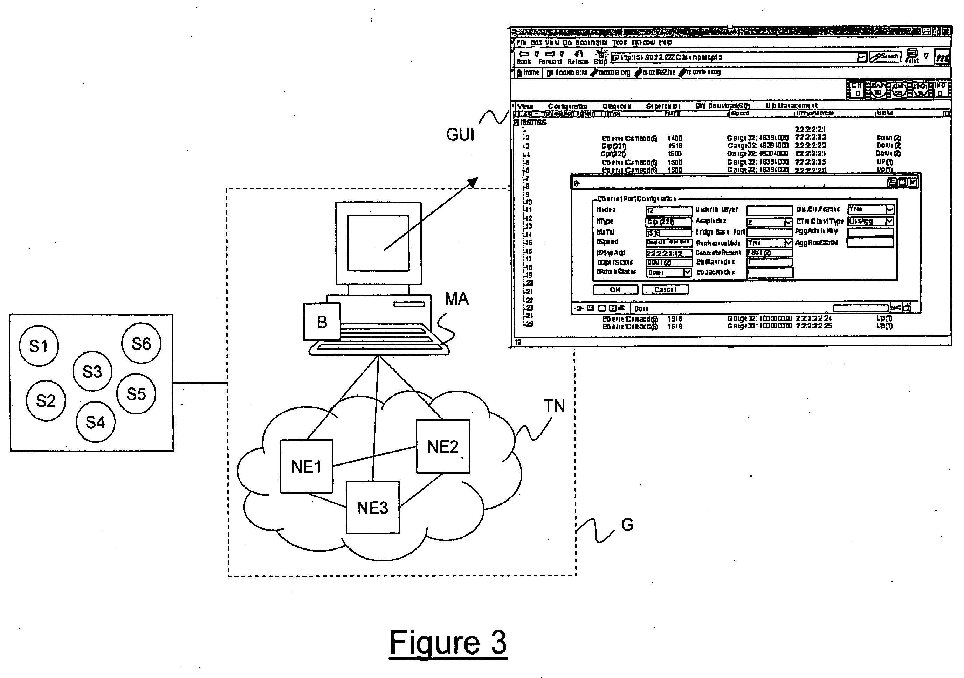

Implementing the service applications S1, ..., S6 as Web Services advantageously allows interaction between different service applications S1, ..., S6 through the web, with consequent advantages which will be explained in detail by referring to Figure 3.

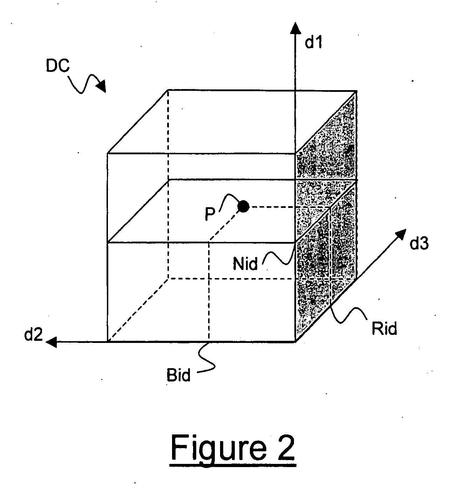

Furthermore, in the embodiment of Figure 1, the browsing module B is adapted to provide a representation of the resources of the telecommunication network TN in form of a data cube DC, which is shown in Figure 2.

In Figure 2, three orthogonal directions d1, d2 and d3 are shown, which are identified by the data cube DC. According to preferred embodiments of the present invention, each point of the data cube DC is a representation of a given resource of the telecommunication network TN. For instance, Figure 2 shows a point P, which could correspond for instance to an Ethernet port placed on a given Ethernet board of a given network element.

The point P is preferably associated to an array of three coordinates (Nid, Bid, Rid) in the reference system identified by the directions d1, d2 and d3. In particular, the coordinate Nid in the direction d1 corresponds to the identifier of the network element to which the resource belongs (i.e., in the example of Figure 1, Nid may be the identifier of the network element NE1, NE2 or NE3). The coordinate Bid along the direction d2 corresponds to the identifier of the board upon which the resource is placed. Finally, the coordinate Rid along the direction d3 corresponds to the identifier of the resource itself. Therefore, the set of resources of a given network element is represented by a plane parallel to directions d2 and d3 and intersecting the direction d1 at the coordinate Nid corresponding to the identifier of the network element.

Advantageously, such a representation of the resources of the telecommunication network TN is capable of representing resources of any board of any network element, independently of the technology upon which the board is based and therefore of the structure of the local database representing the board resources at the network element. Indeed, according to the technology upon which a board is based, the board resources may be represented in a local database at the network element upon which the board is installed according to a tree structure, or a table structure, etc. Independently of the structure of such a local representation, the representation in form of the data cube DC shown in Figure 2 may be applied. Consequently, advantageously, the browsing module B is capable of accessing any resource of the telecommunication network TN by means of the data cube DC.

Therefore, employing a browsing module B as the sole management application suitable for generating a sole web-like management graphic interface GUI and suitable for accessing several service applications S1, ..., S6 and possibly employing a representation of the resources of the telecommunication network TN in form of a data cube DC by the browsing module B, advantageously allows to provide a management system having a web-like graphic interface which exhibits many advantages.

First of all, according to the present invention traditional management applications are replaced by the combination of a single application (i.e. the browsing module B) having a single web-like graphic interface and a plurality of service applications that may be accessed by the application. In this way, the operator advantageously has a uniform view of the network by means of the single web-like graphic interface, which allows him to access in a simple and intuitive way all the network resources, and which allows him to perform any management operation on any network resource. In concrete terms, advantageously, the operator sees the network according to a representation which is substantially similar to the representation according to which a user sees the web through the browsing module of his computer.

Besides, advantageously, the time and effort for developing the management system according to the present invention is lower than in the known solution.

Further, advantageously, use of the service applications S1, ..., S6 accessible by the browsing module B increases reusability degree of the management software, thus further reducing development time and costs. Indeed, a management operation which was traditionally performed by a single monolithic management application is performed, according to the present invention, by the browsing module invoking a set of service applications, each service application performing a part of the management operation. In other words, the management software is now modular, which modularity advantageously implies higher flexibility and higher management software reusability.

Further, advantageously, the time for performing management operations is reduced relative to the known solution, since no additional translation operation is required for making information exchanged during the management operations displayable by the web-like graphic interface.

Further, advantageously, mapping the content of databases of the various network elements may be updated with a lower effort in comparison to the known solution.

Figure 3 schematically shows a telecommunication network TN provided with a management system according to a second embodiment of the present invention.

The telecommunication network TN is connected to a management apparatus MA as in Figure 1. Further, as in Figure 1, the management apparatus MA is configured for executing the browsing module B. The browsing module B is capable of generating the graphic interface GUI through which the operator may access any resource of the telecommunication network TN and may access the service applications performing the management operations.

According to this second embodiment, the network elements NE1, NE2 and NE3 of the telecommunication network TN and the network management apparatus MA form a calculation grid G.

As it is known, a calculation grid allows to execute distributed applications, i.e. it allows to share execution of a given application among all the computers forming the grid. In other words, the application is shared among all the computers forming the grid. The computers forming the grid communicate with each other via web by means of an application which is termed "middleware". An exemplary calculation grid is the one proposed by the Globus Alliance, which uses the middleware Globus.

According to this second embodiment, the network elements NE1, NE2 and NE3 of the telecommunication network TN and the network management apparatus MA are then connected the one to the others via web by means of a middleware. The Applicant has performed some positive tests by using the above mentioned middleware Globus.

Further, according to this second embodiment, the service applications S1, ..., S6 are implemented as Web Services.

According to this second embodiment, then, all the components of the calculation grid G may access the set of service applications S1, ..., S6. In other words, the calculation grid G allows to share the service applications S1, ..., S6 among the network elements NE1, NE2 and NE3 and the management apparatus MA, so that each service application S1, ... , S6 may be executed not only by the management apparatus MA, but also by any network element NE1, NE2 and NE3 of the telecommunication network TN. Service applications executed on different components of the grid G interact the one with the others through the middleware.

Therefore, advantageously, according to this second embodiment there is not more a separation between the network management apparatus responsible for executing management applications and the network elements to be managed. On the contrary, both the network management apparatus and the network elements are part of a same calculation grid and therefore they have the opportunity of performing at least part of a management operation by executing one or more service applications.

This is particularly advantageous since it allows to decentralize execution of management operations, by using calculation resources (i.e. processor and memory) also of the network elements.

To this purpose, network elements on one hand must support operative systems which make them suitable for web-based interaction through the middleware with other network elements (such as Linux), while on the other hand they must have processors and memories which allow them to execute very complex operations. In this way, it is no more necessary to provide the network management apparatus with an amount of calculation resources suitable for performing all the management operations, since also network elements make available their own calculation resources, through the calculation grid. This is particularly advantageous in current telecommunication networks, which comprise a high number of network elements, thus requiring a very complex management.

It has to be noticed that, according to this second embodiment of the invention, the operator performs management of the telecommunication network TN always by means of a single graphic interface GUI generated by the browsing module B at the management apparatus MA. However, management operations selected by the operator are not necessarily executed by the management apparatus MA, but they can at least partially be executed by any network element NE1, NE2 or NE3 of the telecommunication network TN.

For instance, if an operator wishes to recover the topology of a telecommunication network comprising a very high number of network elements, according to the known solution the network management apparatus (i.e. the NMS) executes the management applications for retrieving from each network element information allowing to recover the network topology. On the contrary, according to this second embodiment, it is possible to select some network elements which, by executing suitable service applications, retrieve information from network elements of a respective sub-network. Then, the network management apparatus executes a service application for interacting by means of the calculation grid with the service applications executed by the selected network elements, allowing to collect information relative to each sub-network for recovering the overall network topology. Such information is then passed to the browsing module B, which module displays them through the graphic interface GUI.

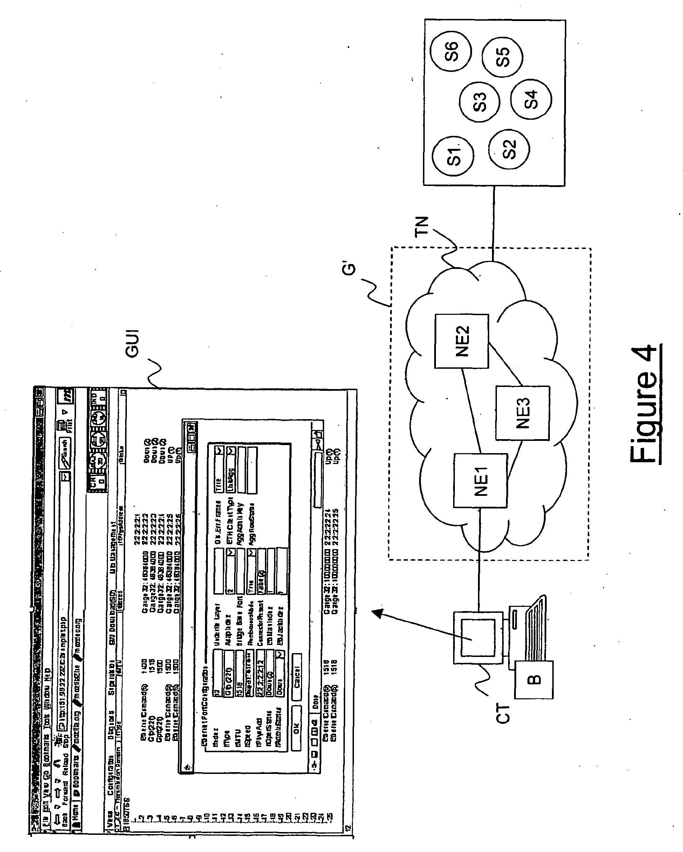

Figure 4 schematically shows a telecommunication network TN provided with a management system according to a third embodiment of the present invention.

According to this third embodiment, the telecommunication network TN is no more connected to a network management apparatus MA separated from the network, as it was previously shown in the embodiments of Figures 1 and 3. On the contrary, network elements NE1, NE and NE3 of the telecommunication network TN form a calculation grid G' which does not comprise any network management apparatus.

A terminal CT suitable to execute the browsing module B is connected to any one of the network elements of the grid G', for instance to the network element NE1. The network elements NE1, NE2 and NE3 of the grid G' therefore share the service applications S1, ..., S6.

According to this third embodiment, when an operator wishes to perform a management operation, he may invoke the suitable service applications through the browsing module B, which service applications are executed by one or more of the network elements NE1, NE2 and NE3. When execution of the service applications is completed, results of the execution are sent to the terminal CT, which displays them by means of the graphic interface GUI.

Therefore, according to the third embodiment of the management system according to the present invention, no management apparatus separated from the network elements is required since, thanks to the calculation grid G', the network elements are adapted to access the service applications S1, ..., S6 and to execute them. In other words, the telecommunication network TN is responsible for performing management operations for managing itself, while the terminal CT only has to execute the browsing module B and to display the graphic interface GUI to the operator.

It has to be noticed that, since all the network elements NE1, NE2 and NE3 belong to the grid G', the terminal CT may be connected to any one of the network elements, since from the management point of view all the network elements belonging to the calculation grid have a same role.

According to a particularly preferred variant of the third embodiment, the management system of the telecommunication network TN is provided with a shared memory mechanism. In other words, the network elements of the telecommunication network TN not only share the service applications S1, ..., S6, but they also share a network representation in the form, for instance, of the data cube shown in Figure 2. Therefore, all the network elements always have at their disposal an updated representation of network resources, i.e. a representation of network resources wherein information relating to each resource are updated.

Indeed, without such a mechanism, each time an operator connects his terminal CT to a given network element for accessing one or more of the other network elements, the network element has to retrieve from the various network elements updated information about their resources, so that it can populate the graphic interface GUI with updated data.

On the contrary, the shared memory mechanism advantageously allows to avoid the retrieval operation, since the network element is already capable of accessing updated information through the calculation grid, and therefore it is capable of populating the graphic interface GUI with updated data without performing any retrieval of information from the other network elements. Further, the shared memory mechanism advantageously allows to perform a same management operation upon a plurality of network elements in a very simple way. Indeed, the management operation only has to be performed on the single network element allowing the operator to access (through the terminal CT) to the calculation grid G'. Then, the same operation will be repeated upon the other network elements of the network. Indeed, since the network elements are all connected by means of the calculation grid G, execution of a management operation upon a network element induces a propagation of the management operation across the network elements specified in the operation.

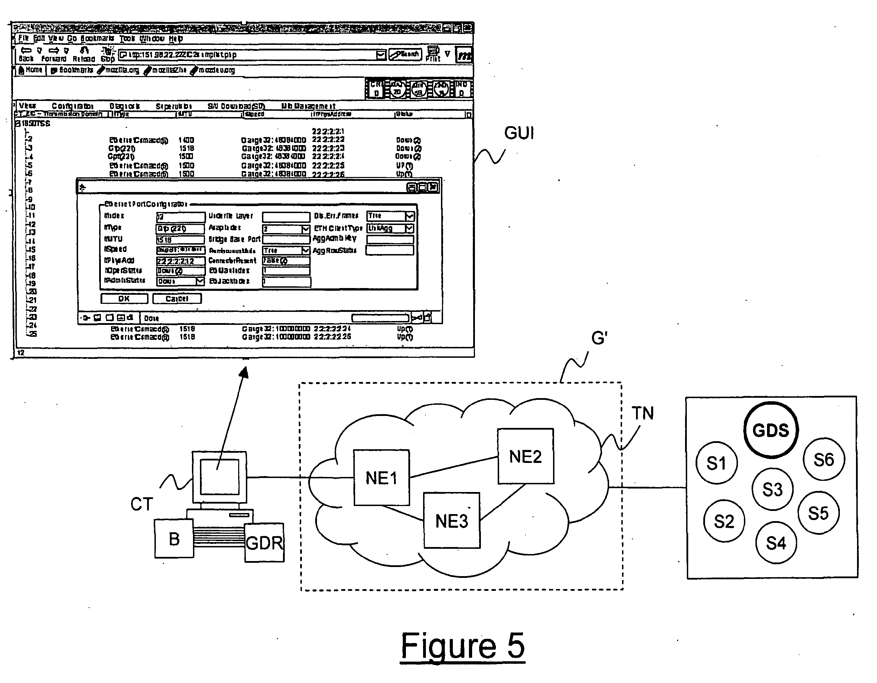

Figure 5 schematically shows a telecommunication network TN provided with a management system according to a fourth embodiment of the present invention.

The fourth embodiment shown in Figure 5 is similar to the embodiment of Figure 3, except that the set of service applications S1, ..., S6 comprises a further service application which will be termed in the following description "information decoration application", and which is indicated in Figure 5 as GDS. As the other service applications S1, ..., S6, also the application GDS is shared among all the components of the calculation grid G', i.e. the network elements NE1, NE2 and NE3 of the telecommunication network TN.

According to the fourth embodiment, the information decoration application GDS, when executed by a given network element, is capable of generating a message comprising:
- information retrieved by the network element from its own local database during a management operation; and
- decoration information, i.e. information relating to a graphic representation mode of retrieved information by means of the graphic interface GUI.

In practice, this operation is preferably performed by generating a message comprising a file written in markup user interface language, such as the XUL language ("XML User Interface Language"). Such a language allows to "complete" the information relating to resource retrieved by the network element with suitable decoration information.

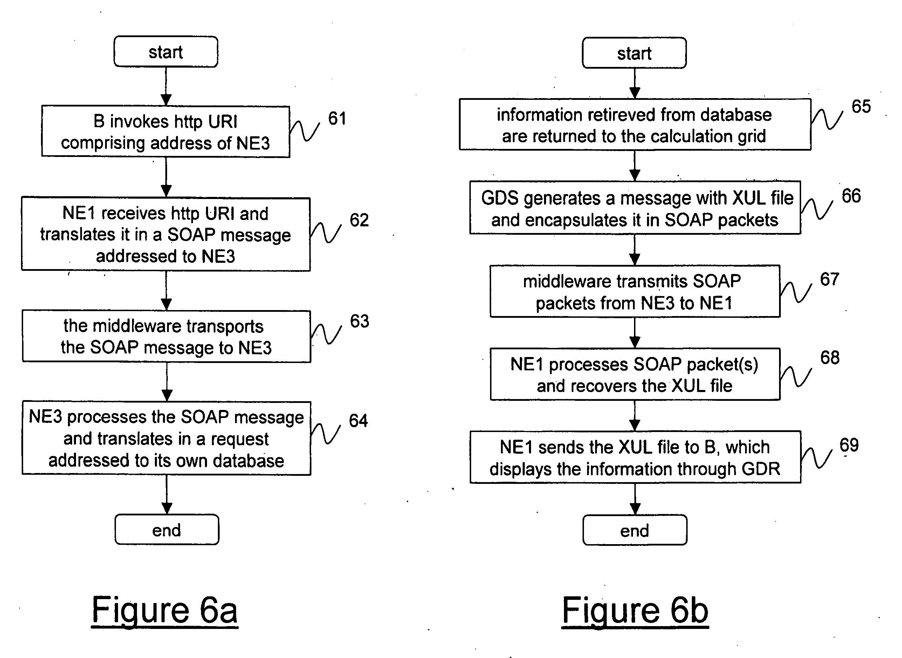

The message generated by the information decoration application GDS is then sent to the terminal CT through the calculation grid, as it will be described in further detail herein after by referring to Figure 6b.

When the file comprising information relating to resources and decoration information is received by the terminal CT, the terminal CT preferably executes a decorated information display application (indicated in Figure 5 as GDR) which is capable of processing the received message and generating the graphic interface showing the information retrieved and displayed according to the decoration information. In the above cited case of use of XUL language, the decorated information display application GDR is preferably the application XUL Runner.

In this way, advantageously, not only is the content of the graphic interface GUI dynamically updated upon reception of information relating to network element resources, but also its graphic appearance is dynamically changed according to information that has to be displayed. This may be advantageously implemented without modifying the logic generating the graphic interface GUI, since the information for dynamically updating the graphic appearance of the graphic interface GUI are comprised in the message received and processed by the decorated information display application GDR.

The operation of the management system shown in Figure 5 will be now described in detail by referring to flow charts of Figures 6a and 6b.

In particular, the flow chart of Figure 6a shows the steps required for transmitting a request during a management operation from an operator connected to a terminal to a managed network element, whereas the flow chart of Figure 6b shows the steps required for transmitting the response to the operator from the managed network element.

It is assumed that an operator responsible for management wishes to perform a management operation, through the terminal CT, upon a resource of the network element NE3. For instance, it is assumed that the operator wishes to read the configuration parameters of an Ethernet cross-connection of an Ethernet board of the network element NE3.

Firstly, the operator connects his own terminal CT to any of the network elements of the telecommunication network TN. For instance, the terminal CT may be connected to the network element NE1, which then acts as access network element to the calculation grid G'. Then, the operator invokes the browsing module B, which generates the graphic interface GUI, through which the set of resources of the telecommunication network TN is displayed (for instance) in form of a data cube, as explained by referring to Figure 2.

By referring first to Figure 6a, the operator explores the resources by means of the graphic interface GUI, and reaches the desired resource of the network element NE3. When the operator selects in the graphic interface GUI the graphic object corresponding to the desired resource, the browsing module B, during a first step 61, generates the http URI ("Uniform Resource identifier") of the selected resource. For instance, if the resource is an Ethernet port, the http URI may be an intranet address such as for instance: 151.98.22.22.

The http URI is then received by the network element NE1, which acts as an access point to the calculation grid G' and, during a successive step 62, it translates the http URI in a request message formatted according to an http-based protocol, e.g. the above cited SOAP protocol.

During a successive step 63, such a message crosses the calculation grid G' (i.e. it is transmitted by the middleware, e.g. Globus), and is finally received by the network element NE3.

When the network element NE3 receives the message SOAP, during a subsequent step 64 the network element NE3 processes the SOAP message and translates it in a request formatted according to its own management protocol, and then it forwards it to its own local database. In this way, the network element NE3 retrieves from the database the information requested by the operator through the terminal CT and the network element NE1 enabling access to the grid G'.

By referring now to Figure 6b, after retrieval of the information, during a successive step 65 the information is sent to the grid G', implemented for instance by the open-source software Globus of the Globus Alliance.

Then, during a successive step 66, the network element NE3 performs the information decoration application GDS, which generates a message (e.g. a XUL file) comprising the retrieved information and the respective decoration information. The message comprising the XUL file is then inserted in one or more SOAP packets to be transmitted across the calculation grid G'.

Afterwards, during a step 67 the middleware of the calculation grid G' transmits the SOAP packet(s) from the network element NE3 to the network element NE1.

The network element NE1, upon reception of the SOAP packet(s), recovers the message comprising the XUL file, and sends it to the terminal CT (step 68).

Finally, during a step 69, the terminal CT executes the decorated information display application GDR which processes the XUL file, and then it displays onto the graphic interface GUI a screen displaying the information retrieved from the network element NE3 with a graphic appearance according to the XUL file content.

## Claims

1. A management system of a telecommunication network (TN), said telecommunication network (TN) comprising a first set of resources based on a first technology and a second set of resources based on a second technology, wherein said management system comprises:
- a browsing module (B) configured to cooperate with a graphic interface (GUI);
- a data structure (DC) for mapping said first set of resources and said second set of resources, said graphic interface (GUI) being configured for displaying said data structure (DC), and said browsing module (B) being capable of accessing said first set of resources and said second set of resources through said data structure (DC);
- a service application (S1, ..., S6, GDS), said browsing module (B) being capable of accessing said service application (S1, ..., S6, GDS) for performing a management operation upon a resource comprised either in said first set of resources or in said second set of resources;
said management system (CS) being **characterized in that** it further comprises a calculation grid (G, G'), said calculation grid (G, G') being adapted to support sharing of said service application (S1, ..., S6, GDS) among a plurality of network elements (NE1, NE2, NE3) of said telecommunication network (TN).

2. The system according to claim 1, further comprising a terminal (CT) configured for communicating with a first network element (NE1) of said plurality of network elements (NE1, NE2, NE3), said terminal (CT) being capable of executing said browsing module (B).

3. The system according to claim 2, wherein said service application (S1, ..., S6, GDS) is capable of being executed by said first network element (NE1) or by a second network element of said plurality of network elements (NE1, NE2, NE3).

4. The system according to any of claims 1 to 3, wherein said management system further comprises a shared memory mechanism for allowing said plurality of network elements (NE1, NE2, NE3) to share said data structure (DC).

5. The system according to any of claims 1 to 4, wherein said service application (S1, ..., S6, GDS) is capable of generating information relating to an information graphic representation mode through said graphic interface (GUI).

6. The system according to claim 5, further comprising an application for displaying decorated information (GDR) which is capable of processing said information relating to an information graphic representation mode.

7. The system according to any of the preceding claims, wherein said service application (S1, ..., S6, GDS) is written in a markup language.

8. The system according to claim 7, wherein said service application (S1, ..., S6, GDS) is a web service.

9. A method of managing a telecommunication network (TN), said telecommunication network (TN) comprising a first set of resources based on a first technology and a second set of resources based on a second technology, wherein said method comprises the following steps:
a) executing a browsing module (B) configured for cooperating with a graphic interface (GUI);
b) mapping in a data structure (DC) the first set of resources and the second set of resources, the data structure (DC) being configured to be represented by the graphic interface (GUI);
c) accessing said first set of resources and said second set of resources mapped in said data structure (DC) by said browsing module (B); and
d) executing by means of said browsing module (B) a service application (S1, ..., S6, GDS) for performing a management operation on a resource comprised either in said first set of resources or in said second set of resources,
said method being **characterized in that** it further comprises a step of sharing said service application (S1, ..., S6, GDS) among a plurality of network elements (NE1, NE2, NE3) of said telecommunication network (TN) through a calculation grid (G, G').

10. The method according to claim 9, wherein said step a) is performed by a terminal (CT) configured for communicating with a first network element (NE1) of said plurality of network elements (NE1, NE2, NE3).

11. The method according to claim 10, wherein said step d) is performed by said first network element (NE1) or by a second network element of the plurality of network elements (NE1, NE2, NE3).

12. The method according to any of claims 9 to 11, further comprising a step of sharing said data structure (DC) by means of a shared memory mechanism.

13. The method according to any of claims 9 to 12, further comprising, after said step d), a step of generating information relating to an information graphic representation mode through said graphic interface (GUI).

14. The method according to claim 13, further comprising a step of processing said information relating to an information graphic representation mode.

15. The method according to any of claims 9 to 14, wherein said service application (S1, ..., S6, GDS) is written in a markup language.

16. The method according to claim 15, wherein said service application (S1, ..., S6, GDS) is a web service.

17. A computer program for a telecommunication network (TN), said telecommunication network (TN) comprising a first set of resources based on a first technology and a second set of resources based on a second technology, wherein the computer program is configured, when run on a computer, to perform all the steps of the method according to claim 9.

18. A computer readable medium having a computer program recorded thereon, wherein the computer program is configured, when run on a computer, to perform all the steps of the method according to claim 9.

## Patentansprüche

1. Verwaltungssystem eines Telekommunikationsnetzwerks (TN), wobei das besagte Telekommunikationsnetzwerk (TN) einen ersten Satz von auf einer ersten Technologie basierten Resourcen und einen zweiten Satz von auf einer zweiten Technologie basierten Resourcen umfasst, wobei das besagte Verwattungssystem umfasst:
- Ein Browsing-Modul (B), konfiguriert für das Zusammenwirken mit einer grafischen Schnittstelle (GUI);
- eine Datenstruktur (DC) zum Abbilden des besagten ersten Satzes von Resourcen und des besagten zweiten Satzes von Resourcen, wobei die besagte grafische Schnittstelle (GUI) für das Anzeigen der besagten Datenstruktur (DC) konfiguriert ist, und wobei das besagte Browsing-Modul (B) fähig ist, über die besagte Datenstruktur (DC) auf den besagten ersten Satz von Resourcen und den besagten zweiten Satz von Ressourcen zuzugreifen;
- eine Dienstanwendung (S1, ... , S6, GDS), wobei das besagte Browsing-Modul (B) fähig ist, auf die besagte Dienstanwendung (S1, ... , S6, GDS) zuzugreifen, um auf einer entweder in dem besagten ersten Satz von Resourcen oder in dem besagten zweiten Satz von Resourcen enthaltenen Ressource eine Verwaltungsoperation durchzuführen;
wobei das besagte Verwaltungssystem (CS) **dadurch gekennzeichnet ist, dass** es weiterhin ein Berechnungsgitter (G, G') umfasst, wobei das besagte Berechnungsgitter (G, G') für die Unterstützung der gemeinsamen Nutzung der besagten Dienstanwendung (S1, ..., S6, GDS) durch eine Vielzahl von Netzwerkelementen (NE1, NE2, NE3) des besagten Telekommunikationsnetzwerks (TN) ausgelegt ist.

2. System nach Anspruch 1, weiterhin umfassend ein Endgerät (CT), welches für die Kommunikation mit einem ersten Netzwerkelement (NE1) der besagten Vielzahl von Netzwerkelementen (NE1, NE2, NE3) konfiguriert ist, wobei das besagte Endgerät (CT) fähig ist, das besagte Browsing-Modul (B) auszuführen.

3. System nach Anspruch 2, wobei die besagte Dienstanwendung (S1...., S6, GDS) fähig ist, von dem besagten ersten Netzwerk (NE1) oder von einem zweiten Netzwerkelement der besagten Vielzahl von Netzwerkelementen (NE1, NE2, NE3) ausgeführt zu werden.

4. System nach einem beliebigen der Ansprüche 1 bis 3, wobei das besagte Verwaltungssystem weiterhin einen gemeinsam benutzten Speichermechanismus umfasst, um es der besagten Vielzahl von Netzwerkelementen (NE1, NE2, NE3) zu ermöglichen, die besagte Datenstruktur (DC) gemeinsam zu nutzen.

5. System nach einem beliebigen der Ansprüche 1 bis 4, wobei die besagte Dienstanwendung (S1, ..., S6, GDS) fähig ist, über die besagte grafische Schnittstelle (GUI) einen grafischen Informationsdarstellungsmodus betreffende Informationen zu erzeugen.

6. System nach Anspruch 5, weiterhin umfassend eine Anwendung zum Anzeigen von dekorierten Informationen (GDR), welche fähig ist, die besagten einen grafischen Informationsdarstellungsmodus betreffenden Informationen zu verarbeiten.

7. System nach einem beliebigen der vorstehenden Ansprüche, wobei die besagte Dienstanwendung (S1, ..., S6, GDS) in einer Auszeichnungssprache beschrieben wird.

8. System nach Anspruch 7, wobei die besagte Dienstanwendung (S1, ..., S6, GDS) ein Webdienst ist.

9. Verfahren zur Verwaltung eines Telekommunikationsnetzwerks (TN), wobei das besagte Telekommunikationsnetzwerk (TN) einen ersten Satz von auf einer ersten Technologie basierten Ressourcen und einen zweiten Satz von auf einer zweiten Technologie basierten Ressourcen umfasst, wobei das besagte Verfahren die folgenden Schritte umfasst:
a) Ausführen eines Browsing-Moduls (B), welches für das Zusammenwirken mit einer grafischen Schnittstellen (GUI) konfiguriert ist;
b) Abbilden des ersten Satzes von Ressourcen und des zweiten Satzes von Ressourcen in einer Datenstruktur (DC), wobei die Datenstruktur (DC) dafür konfiguriert ist, durch die grafische Schnittstelle (GUI) dargestellt zu werden;
c) Zugreifen, durch das besagte Browsing-Modul (B), auf den besagten ersten Satz von Ressourcen und den besagten zweiten Satz von Ressourcen, welche in der besagten Datenstruktur (DC) abgebildet sind; und
d) Ausführen, anhand des besagten Browsing-Moduls (B), einer Dienstanwendung (S1, .... S6, GDS) zum Durchführen einer Verwaltungsoperation auf einer entweder in dem besagten ersten Satz von Ressourcen oder in dem besagten zweite Satz von Ressourcen enthaltenen Ressource;
wobei das besagte Verfahren **dadurch gekennzeichnet ist, dass** es weiterhin einen Schritt der gemeinsamen Nutzung der besagten Dienstanwendung (S1, ..., S6, GDS) durch eine Vielzahl von Netzwerkelementen (NE1, NE2, NE3) des besagten Telekommunikationsnetzwerks (TN) über ein Berechnungsgitter (G, G') umfasst.

10. Verfahren nach Anspruch 9, wobei der besagte Schritt a) durch ein Endgerät (CT) durchgerührt wird, welches für die Kommunikation mit einem ersten Netzwerkelement (NE1) der besagten Vielzahl von Netzwerkelementen (NE1, NE2, NE3) konfiguriert ist.

11. Verfahren nach Anspruch 10, wobei der besagte Schritt d) durch das besagte erste Netzwerkelement (NE1) oder durch ein zweites Netzwerkelement der Vielzahl von Netzwerkelementen (NE1, NE2, NE3) durchgeführt wird.

12. Verfahren nach einem beliebigen der Anspruche 9 bis 11, weiterhin umfassend einen Schritt der gemeinsamen Nutzung der besagten Datenstruktur (DC) anhand eines gemeinsam benutzten Speichermechanismus.

13. Verfahren nach einem beliebigen der Ansprüche 9 bis 12, weiterhin umfassend, im Anschluss an den besagten Schritt d), einen Schritt des Erzeugens von einen grafischen Informationsdarstellungsmodus betreffenden Informationen durch die besagte grafische Schnittstelle (GUI).

14. Verfahren nach Anspruch 13, weiterhin umfassend einen Schritt des Verarbeitens der besagten einen grafischen Informationsdarstellungsmodus betreffenden Informationen.

15. Verfahren nach einem beliebigen der Anspruche 9 bis 14, wobei die besagte Dienstanwendung (S1, ..., S6, GDS) in einer Auszeichnungssprache beschrieben wird.

16. Verfahren nach Anspruch 15, wobei die besagte Dienstanwendung (S1, ..., S6, GDS) ein Webdienst ist,

17. Computerprogramm für ein Telekommunikationsnetzwerk (TN), wobei das besagte Telekommunikationsnetzwerk (TN) einen ersten Satz von auf einer ersten Technologie basierten Ressourcen und einen zweiten Satz von auf einer zweiten Technologie basierten Ressourcen umfasst, wobei das Computerprogramm dafür konfiguriert ist, alle Schritte des Verfahrens gemäß Anspruch 9 durchzuführen, wenn es auf einem Computer läuft.

18. Computerlesbares Medium, auf welchem ein Computerprogramm gespeichert ist, wobei das Computerprogramm dafür konfiguriert ist, alle Schritte des Verfahrens gemäß Anspruch 9 durchzuführen, wenn es auf einem Computer läuft.

## Revendications

1. Système de gestion d'un réseau de télécommunications (TN), ledit réseau de télécommunications (TN) comprenant un premier ensemble de ressources basé sur une première technologie et un second ensemble de ressources basé sur une seconde technologie, dans lequel ledit système de gestion comprend :
- un module de navigation (B) configuré pour coopérer avec une interface graphique (GUI) ;
- une structure de données (DC) destinée à mettre en correspondance ledit premier ensemble de ressources et ledit second ensemble de ressources, ladite interface graphique (GUI) étant configurée pour afficher ladite structure de données (DC), et ledit module de navigation (B) étant capable d'accéder audit premier ensemble de ressources et audit second ensemble de ressources par l'intermédiaire de ladite structure de données (DC) ;
- une application de service (S1, ..., S6, GDS), ledit module de navigation (B) étant capable d'accéder à ladite application de service (S1, ..., S6, GDS) pour exécuter une opération de gestion sur une ressource comprise soit dans ledit premier ensemble de ressources, soit dans ledit second ensemble de ressources ;
ledit système de gestion (CS) étant **caractérisé en ce qu'**il comprend en outre une grille de calcul (G, G'), ladite grille de calcul (G, G') étant adaptée pour prendre en charge le partage de ladite application de service (S1, ..., S6, GDS) parmi une pluralité d'éléments de réseau (NE1, NE2, NE3) dudit réseau de télécommunications (TN).

2. Système selon la revendication 1, comprenant en outre un terminal (CT) configuré pour communiquer avec un premier élément de réseau (NE1) de ladite pluralité d'éléments de réseau (NE1, NE2, NE3), ledit terminal (CT) étant capable d'exécuter ledit module de navigation (B).

3. Système selon la revendication 2, dans lequel ladite application de service (S1, ..., S6, GDS) est capable d'être exécutée par ledit premier élément de réseau (NE1) ou par un deuxième élément de réseau de ladite pluralité d'éléments de réseau (NE1, NE2, NE3).

4. Système selon l'une quelconque des revendications 1 à 3, dans lequel ledit système de gestion comprend en outre un mécanisme de mémoire partagée pour permettre à ladite pluralité d'éléments de réseau (NE1, NE2, NE3) de partager ladite structure de données (DC).

5. Système selon l'une quelconque des revendications 1 à 4, dans lequel ladite application de service (S1, ..., S6, GDS) est capable de générer des informations relatives à un mode de représentation graphique des informations par l'intermédiaire de ladite interface graphique (GUI).

6. Système selon la revendication 5, comprenant en outre une application pour afficher les informations décorées (GDR) qui est capable de traiter lesdites informations relatives à un mode de représentation graphique des informations.

7. Système selon l'une quelconque des revendications précédentes, dans lequel ladite application de service (S1,..., S6, GDS) est écrite dans un langage de balisage.

8. Système selon la revendication 7, dans lequel ladite application de service (S1, ..., S6, GDS) est un service web.

9. Procédé de gestion d'un réseau de télécommunications (TN), ledit réseau de télécommunications (TN) comprenant un premier ensemble de ressources basé sur une première technologie et un second ensemble de ressources basé sur une seconde technologie, dans lequel ledit procédé comprend les étapes suivantes :
a) exécuter un module de navigation (B) configuré pour coopérer avec une interface graphique (GUI) ;
b) faire correspondre dans une structure de données (DC) le premier ensemble de ressources et le second ensemble de ressources, la structure de données (DC) étant configurée pour être représentée par l'interface graphique (GUI) ;
c) accéder audit premier ensemble de ressources et audit second ensemble de ressources mis en correspondance dans ladite structure de données (DC) au moyen dudit module de navigation (B) ; et
d) exécuter, au moyen dudit module de balayage (B), une application de service (S1, ..., S6, GDS) pour effectuer une opération de gestion sur une ressource comprise dans ledit premier ensemble de ressources ou dans ledit second ensemble de ressources,
ledit procédé étant **caractérisé en ce qu'**il comprend en outre une étape de partage de ladite application de service (S1, ..., S6, GDS) parmi une pluralité d'éléments de réseau (NE1, NE2, NE3) dudit réseau de télécommunications (TN) par l'intermédiaire d'une grille de calcul (G, G').

10. Procédé selon la revendication 9, dans lequel ladite étape a) est exécutée par un terminal (CT) configuré pour communiquer avec un premier élément de réseau (NE1) de ladite pluralité d'éléments de réseau (NE1, NE2, NE3).

11. Procédé selon la revendication 10, dans lequel ladite étape d) est exécutée par ledit premier élément de réseau (NE1) ou par un deuxième élément de réseau de la pluralité d'éléments de réseau (NE1, NE2, NE3).

12. Procédé selon l'une quelconque des revendications 9 à 11, comprenant en outre une étape de partage de ladite structure de données (DC) au moyen d'un mécanisme de mémoire partagée.

13. Procédé selon l'une quelconque des revendications 9 à 12, comprenant en outre, après ladite étape d), une étape de génération d'informations relatives à un mode de représentation graphique des informations par l'intermédiaire de ladite interface graphique (GUI).

14. Procédé selon la revendication 13, comprenant en outre une étape de traitement desdites informations relatives à un mode de représentation graphique des informations.

15. Procédé selon l'une quelconque des revendications 9 à 14, dans lequel ladite application de service (S1, ..., S6, GDS) est écrite dans un langage de balisage.

16. Procédé selon la revendication 15, dans lequel ladite application de service (S1, ..., S6, GDS) est un service web.

17. Programme informatique pour un réseau de télécommunications (TN), ledit réseau de télécommunications (TN) comprenant un premier ensemble de ressources basé sur une première technologie et un second ensemble de ressources basé sur une seconde technologie, dans lequel le programme informatique est configuré pour, lorsqu'il est exécuté sur un ordinateur, exécuter toutes les étapes du procédé selon la revendication 9.

18. Support lisible par ordinateur ayant un programme informatique enregistré dessus, dans lequel le programme informatique est configuré pour, lorsqu'il est exécuté sur un ordinateur, exécuter toutes les étapes du procédé selon la revendication 9.
